# EUROPÄISCHE PATENTSCHRIFT

(11) **EP 1 316 248 B1**
(45) Veröffentlichungstag und Bekanntmachung des Hinweises auf die Patenterteilung: **09.01.2008**
(21) Anmeldenummer: 02024646.8
(22) Anmeldetag: 05.11.2002
(51) Int. Cl.: A01D 13/00, A01D 21/00

(54) **Rodeaggregat**
Lifting assembly
Ensemble d'arrachage

(30) Priorität: 28.11.2001 DE 20119277 U
(43) Veröffentlichungstag der Anmeldung: 04.06.2003
(73) Patentinhaber: Holmer Maschinenbau GmbH, 84069 Eggmühl (DE)
(72) Erfinder: Holmer, Alfons, 84069 Eggmühl (DE)
(74) Vertreter: Graf, Helmut

(56) Entgegenhaltungen:
- EP-A- 0 803 178
- GB-A- 1 103 612
- GB-A- 1 546 410
- US-A- 1 494 873

## Beschreibung

Die Erfindung bezieht sich auf ein Rodeaggregat gemäß Oberbegriff Patentanspruch 1 und dabei bevorzugt auf ein Rodeaggregat zum Roden bzw. Ernten von Kartoffeln.

Ein Rodeaggregat der gattungsmäßigen Art ist bekannt (US 1,494,873).

Bekannt ist weiterhin auch eine selbstfahrende Hackfruchterntemaschine (EP 0,803,178 A1) mit einem vor der Vorderachse dieser Maschine angeordneten Rodeaggregat, welches zum mehrreihigen Roden von Wurzelfrüchten, insbesondere Kartoffeln mehrere Rodeeinheiten bildet, und zwar jeweils bestehend aus Scheibensechpaaren und zugehörigen Rodescharen.

Rodeaggregate dieser Art sind bekannt. Aufgabe der Erfindung ist es, die Arbeitsweise eines derartigen Rodeaggregats zu verbessern. Zur Lösung dieser Aufgabe ist ein Rodeaggregat entsprechend dem Patentanspruch 1 ausgebildet.

Durch die Schräg- oder Winkelstellung, die die Scheibensechen des wenigstens einen Scheibensechpaares zueinander aufweisen, ist ohne Beeinträchtigung der Funktion der Scheibensechen ein Zusetzen des zwischen den Scheibensechen eines Scheibensechpaares gebildeten Raumes mit Erde, Erdbalken usw. wirksam verhindert und damit auch Störungen in der Funktion des Rodeaggregats, und zwar bei frei drehbar angeordneten Scheibensechen und ohne die Notwendigkeit eines gesonderten Antriebs für diese Scheibensechen.

Weiterbildungen der Erfindung sind Gegenstand der Unteransprüche. Die Erfindung wird im Folgenden anhand der Figuren an einem Ausführungsbeispiel näher erläutert.
Es zeigen:
- Fig. 1: in schematischer Darstellung und in Seitenansicht ein an der Vorderseite einer Erntemaschine vorgesehenes Rodeaggregat;
- Fig. 2: in vereinfachter schematischer Darstellung eine Draufsicht auf das Rodeaggregat der Figur 1, zusammen mit einer sehr vereinfachten Darstellung des Fahrzeugs;
- Fig. 3: in vergrößerter Teildarstellung zwei Scheibensechen eines Scheibensechpaares.

In den Figuren ist mit 1 allgemein ein Rodeaggregat zum Roden von Wurzelfrüchten, insbesondere Kartoffeln bezeichnet, welches an der Frontseite eines in den Figuren nur sehr schematisch dargestellten, selbstfahrenden Erntefahrzeugs 2 (z.B. Kartoffelernter) bzw. an einer dortigen heb- und senkbaren Auslegeeinheit 3 vorgesehen ist. Das Rodeaggregat, welches zum gleichzeitigen mehrreihigen Ernten bzw. Roden dient, besitzt in bekannter Weise an einer Tragrahmeneinheit 4, die bei der dargestellten Ausführungsform von zwei individuell verstellbaren Tragrahmen 5 gebildet ist mehrere Dammrollen 6, und zwar bei der dargestellten Ausführungsform jeweils zwei Dammrollen 6 an jedem Tragrahmen 5, und beim Bewegen des Rodeaggregats in Fahrt- und Roderichtung A auf jede Dammrolle 6 folgend zwei Scheibensechen 7 mit zugehörigem Rodeschar 8.

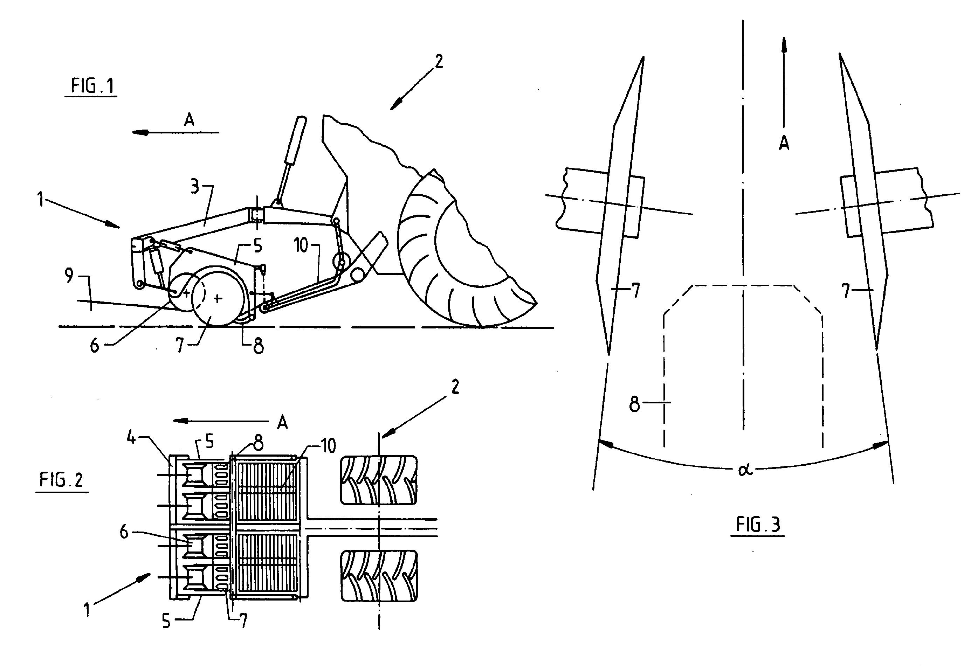

Beim Roden, d.h. beim Vorwärtsbewegen des Erntefahrzeugs 3 und des Rodeaggregats 1 in Richtung des Pfeiles A der Figur 1 wird durch die Dammrollen 8 die Höhenlage des Rodeaggregats bzw. der Tragrahmen 5 gesteuert, so daß mit den Scheibensechen 7 jedes Scheibensechpaares das Erdreich seitlich von dem Kartoffeldamm 9 eingeschnitten und mit dem nachfolgenden Rodeschar 8 das Erntegut aus dem Boden gehoben wird, so daß dieses dann auf ein anschließendes Sieb- und Transportband 10 gelangt.

Um zu verhindern, daß sich bei Roden insbesondere auch im schweren und feuchten Boden Erdbalken zwischen den Scheibensechen 7 der Scheibensechpaare festsetzen und hierdurch der Rodevorgang behindern, sind die Scheibensechen 7 jedes Scheibensechpaares entsprechend der Figur 3 auf am jeweiligen Tragrahmen 5 befestigten Wellen 11 derart frei drehbar gelagert, daß die Ebenen, in denen die Scheibensechen 7 eines Scheibensechpaares mit ihrer Umfangslinie angeordnet sind, einen Winkel α solcher Größe miteinander einschließt, daß die Funktion der Scheibensechen nicht beeinträchtigt ist, die Scheibensechen 7 eines Scheibensechpaares aber an dem in Roderichtung nacheilenden und dem jeweiligen Rodeschar 8 benachbarten Umfangsbereich einen größeren Abstand voneinander aufweisen als an dem jeweiligen, in Roderichtung vorauseilenden Umfangsbereich. Erdklumpen oder Erdbalken können sich hierdurch zwischen den Scheibensechen 7 eines Scheibensechpaares nicht festsetzen, sondern fallen spätestens in dem Bereich, an dem die Scheibensechen 7 ihren größten Abstand voneinander aufweisen, ab.

Der Winkel α ist kleiner als 10° und liegt beispielsweise in der Größenordnung von 0,5 bis 3°.

Die Erfindung wurde voranstehend an einem Ausführungsbeispiel beschrieben. Es versteht sich, daß zahlreiche Änderungen sowie Abwandlungen möglich sind, ohne daß dadurch der der Erfindung zugrundeliegende Erfindungsgedanke verlassen wird.

### Bezugszeichenliste

- 1: Rodeaggregat
- 2: Erntefahrzeug
- 3: Auslegereinheit
- 4: Rahmeneinheit
- 5: Tragrahmen
- 6: Dammrolle
- 7: Scheibensech
- 8: Rodeschar
- 9: Kartoffeldamm
- 10: Transport- oder Siebband
- A: Fahrtrichtung beim Roden

## Patentansprüche

1. Rodeaggregat zum Roden bzw. Ernten von Wurzelfrüchten, insbesondere Kartoffeln, mit wenigstens einer Rodeeinheit mit mindestens zwei Scheibensechen (7), die ein Scheibensechpaar bilden und in einer quer zu einer Roderichtung (A) verlaufenden Achsrichtung gegeneinander versetzt drehbar an einem Rahmen oder Träger des Rodeaggregats (1) derart vorgesehen sind, daß die Scheibensechen (7) des wenigstens einen Scheibensechpaares einen Winkel (α) miteinander einschließen, der sich entgegen der Bewegungsrichtung (A) des Rodeaggregats (1) beim Roden öffnet, **dadurch gekennzeichnet, daß** der Winkel (α) kleiner als 10° ist.

2. Rodeaggregat nach Anspruch 1, **dadurch gekennzeichnet, daß** der Winkel (α) im Bereich zwischen 0,5 bis 3° liegt.

3. Rodeaggregat nach Anspruch 1 oder 2, **dadurch gekennzeichnet, daß** die Achsen der Scheibensechen (7) des wenigstens einen Scheibensechpaares in einer gemeinsamen Ebene, vorzugsweise in einer gemeinsamen horizontalen oder annähernd horizontalen Ebene angeordnet sind.

4. Rodeaggregat nach einem der vorhergehenden Ansprüche, **gekennzeichnet durch** mehrere quer zur Roderichtung (A) nebeneinander angeordnete Rodeeinheiten mit jeweils wenigstens einem Scheibensechpaar.

5. Rodeaggregat nach einem der vorhergehenden Ansprüche, **gekennzeichnet durch** wenigstens eine Dammrolle (6) an der wenigstens einen Rodeeinheit.

6. Rodeaggregat nach einem der vorhergehenden Ansprüche, **gekennzeichnet durch** wenigstens ein Rodeschar (8) an der wenigstens einen Rodeeinheit.

## Claims

1. Lifting assembly for lifting and harvesting root crops, more particularly potatoes, with at least one lifting unit with at least two disc coulters (7) which form a disc coulter pair and are provided on a frame or support of the lifting assembly (1) where they are rotatable off-set opposite one another in an axial direction running transversely to a lifting direction (A) so that the disc coulters (7) of the at least one disc coulter pair include an angle (α) with one another which opens against the direction (A) of movement of the lifting assembly (1) during lifting, **characterised in that** the angle (α) is less than 10°.

2. Lifting assembly according to claim 1 **characterised in that** the angle (α) is in the range between 0.5 and 3°.

3. Lifting assembly according to claim 1 or 2 **characterised in that** the axles of the disc coulters (7) of the at least one disc coulter pair are disposed in a common plane, preferably in a common horizontal or approximately horizontally plane.

4. Lifting assembly according to one of the preceding claims **characterised by** several lifting units each with at least one disc coulter pair and mounted side by side transversely to the lifting direction (A).

5. Lifting assembly according to one of the preceding claims **characterised by** at least one ridge roller (6) on the at least one lifting unit.

6. Lifting assembly according to one of the preceding claims **characterised by** at least one lifting share (8) on the at least one lifting unit.

## Revendications

1. Ensemble d'arrachage pour arracher, c'est-à-dire récolter, des tubercules, en particulier des pommes de terre, avec au moins une unité d'arrachage avec au moins deux coutres à disque (7) qui forment une paire de coutres à disque et qui sont agencées, écartées l'une de l'autre dans une direction d'axe transversale à une direction d'arrachage (A), rotatives sur un châssis ou support du dispositif d'arrachage de manière à ce que les coutres à disque (7) de l'au moins une paire de coutres à disque délimitent ensemble un angle (α) s'ouvrant dans la direction du mouvement (A) de l'ensemble d'arrachage (1) pendant l'arrachage, **caractérisé en ce que** l'angle (α) est de moins de 10°.

2. Ensemble d'arrachage suivant la revendication 1, **caractérisé en ce que** l'angle (α) se trouve dans le domaine entre 0,5 et 3°.

3. Ensemble d'arrachage suivant la revendication 1 ou 2, **caractérisé en ce que** les axes des coutres à disque (7) de l'au moins une paire de coutres à disques sont arrangés dans un plan commun, de préférence dans un plan commun horizontal ou presque horizontal.

4. Ensemble d'arrachage suivant une des revendications précédentes, **caractérisé par** plusieurs unités d'arrachage arrangées côte-à-côte de travers à la direction d'arrachage (A), avec chacune au moins une paire de coutres à disque.

5. Ensemble d'arrachage suivant une des revendications précédentes, **caractérisé par** au moins un rouleau d'appui sur levée de terre (6) sur l'au moins une unité d'arrachage.

6. Ensemble d'arrachage suivant une des revendications précédentes, **caractérisé par** au moins un soc d'arrachage (8) sur l'au moins une unité d'arrachage.
